Europäisches Patentamt

European Patent Office

Office européen des brevets

(19)

(11) Publication number: **0 296 357**

**A1**

## EUROPEAN PATENT APPLICATION

(21) Application number: **88107909.9**

(22) Date of filing: **18.05.88**

(51) Int. Cl.⁴ **F22B 21/22**

(30) Priority: **22.05.87 SE 8702162**

(43) Date of publication of application:
**28.12.88 Bulletin 88/52**

(84) Designated Contracting States:
**CH DE FR GB IT LI**

(71) Applicant: **AB ASEA-ATOM**

**S-721 83 Västeras(SE)**

(72) Inventor: **Hannerz, Kare**
**Raby Rytterne**
**S-725 92 Västeras(SE)**

(74) Representative: **Boecker, Joachim, Dr.-Ing.**
**Rathenauplatz 2-8**
**D-6000 Frankfurt a.M. 1(DE)**

(54) **Steam generator for a nuclear pressurized water reactor.**

(57) Steam generator for a pressurized water reactor comprising means for supply and return of hot water from and to the reactor for heating of feed water for steam generation, and means for supply of said feed water and removal of the steam generated. According to the invention bundles of U-shaped tubes (1) are arranged to be traversed by feed water, which bundles are located around a riser (8) for hot water from the reactor. The hot water for heating the feed water is adapted to be supplied from above (3) at one of the upper ends of the tube bundles, and, after flowing along the tubes (1), the hot water is led away from the other upper end of the tube bundles via at least one vertical gap (6) extending downwards between the tube bundles the lower end of said gap being connected to a passage way back to the reactor. The design facilitates inspection and repair because servicing of the steam generating tubes can be fully performed with access from one side only to the steam generator.

FIG.1

## Steam generator for a nuclear pressurized water reactor

The invention relates to a steam generator for a nuclear pressurized water reactor according to the precharacterising part of Claim 1.

For pressurized water reactors of the so-called PIUS type, described, inter alia, in US-A-4,526,742, a steam generator is suitably used for one through flow of the feed water on the secondary side, a so-called once-through steam generator (OTSG), which directly produces a somewhat superheated, dry steam at the outlet.

For several reasons it is desirable to use an embodiment in which steam is generated inside tubes which are surrounded by the exothermal primary cooling water. In particular if the steam generators are located inside the same concrete pressure vessel as the core, the riser and the so-called density locks, it is desirable for all the tubes to be easily accessible for inspection and repair from above, since tube attachments in a tube sheet at the lower end of the steam generator are, of course, very difficult to reach.

In a steam generator with steam generation inside the tubes, servicing, such as non-destructive inspection and plugging of defective tubes, is suitably carried out in direct contact with the secondary side, which has not or only insignificantly been contaminated with radioactivity. In order to avoid extensive dismantling work to enable such servicing, it is suitable to gain access via an outgoing steam conduit, which normally has a diameter of 700-800 mm. Since the incoming feed water pipe has much too small a diameter to permit entry for maintenance personnel, it should also be possible to reach the weld joints between the feed water end of the tubes and the tube sheet via the steam conduit.

The invention aims at a steam generator for a pressurized nuclear water reactor which enables a simple but thorough servicing of the steam generator which can be performed from one side of the steam generator only.

To achieve this aim the invention suggests a steam generator according to the introductory part of Claim 1, which is characterized by the features of the characterizing part of Claim 1.

Further developments of the invention are characterized by the features of the additional claims.

The steam generator according to the invention permits easy access to all weld joints between the steam generator tubes and the tube sheet from one and the same side of the steam generator while at the same time the entire tube length is used for heat transfer and is accessible for non-destructive testing.

The invention will now be described in greater detail with reference to the accompanying drawing which shows - by way of example - one embodiment of a steam generator according to the invention in various sectional views as indicated by capital letters.

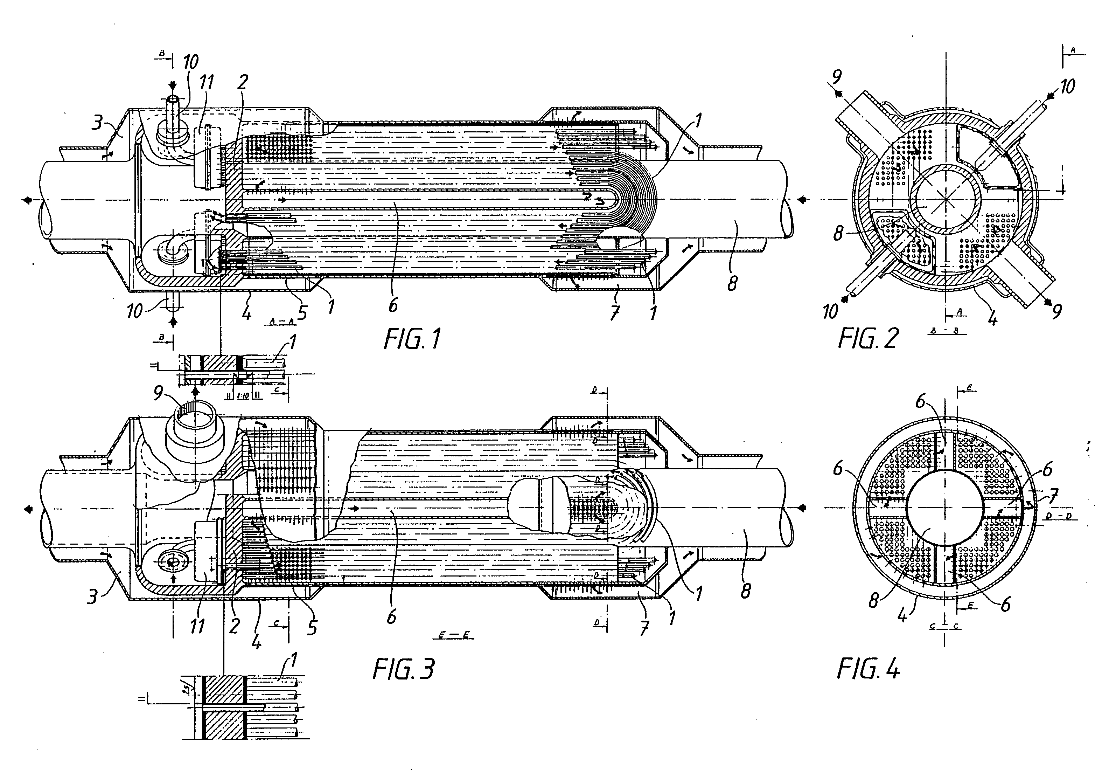

Figure 1 and 3 are vertical sections, and Figure 2 and 4 are horizontal sections.

The heat-transmitting tubes 1 are U-shaped and are attached with both their ends at the top to one and the same tube sheet 2. The hot water from the primary system of the reactor is supplied from above to an annular chamber 3, the outer wall 4 of which constitutes the upper outer limit of the steam generator. The inner wall 5 of the annular chamber 3 is perforated, at two portions located opposite to each other and extending along about 20% of the circumference each, by a large number of small holes through which the hot primary water flows radially inwardly to the hot end of the tube bundle located behind the inner wall 5. The steam generated in the tubes 1 passes out through the tube sheet 2 above this inlet portion. The flow inside and outside the tubes takes place in opposite directions, while steam generation takes place inside the tubes and cooling of the primary water takes place outside the tubes. When the primary water has passed along the entire length of the U-tube and has reached that area on the tube sheet 2 where the feed water end of the U-tubes is welded, the primary water leaves the tube bundle and passes via a perforated plate out into at least one vertical gap 6, which separates a region where primary water flows upwards from a region where primary water flows downwards. The primary water then flows downwards along this gap 6. At its lower end the gap connects with an annular space 7 having an outer diameter approximately equal to the above-mentioned outer diameter of the outer wall 4. From the space 7 the primary water flows further down back to the reactor.

A plurality of U-shaped tube bundles, preferably four as shown in the figures, are arranged on one and the same tube plate, this being given an annular shape. Through the centre there passes the riser 8, mentioned in the above-mentioned US patent. Suitably, the steam generator is formed with two steam conduits 9 and two feed water pipes 10.

The orifices on the U-shaped tubes, where the feed water flows in, are separated from the steam space by means of a removable box 11 which will be removed if tubes are to be plugged. The tubes in their entire length can be reached for non-destructive testing, for example with an eddy current probe, from the other end of the tubes opening out into the steam space. In an alternative, which is also shown in the drawing (Figure 1), this feed water box 11 is located somewhat above the tube plate 2 and is connected thereto by means of extensions of the steam generator tubes.

A U-tube arrangement with downward flow on the secondary side presupposes that the mass flow there is relatively great in order to obtain a stable flow. However, for a reactor of the PIUS type it is desirable, in case of partial power, to operate with an approximately constant outlet temperature from the core, whereas the primary mass flow is approximately constant when the inlet temperature on the primary side rises with decreasing power. To reduce the thermal stresses in the tube plate, the feed water is preheated with fresh steam in case of partial power.

The feed water flow, on the other hand, is made approximately proportional to the power. For this reason, in a steam generator with U-tubes, the feed water will be completely evaporated even along the downward distance, and under these circumstances there is a risk that the flow conditions on the secondary side become unstable. This can be avoided, for example, by a device which is designed as follows: In this device, the feed water ends of the steam generator tubes in the inlet part of the secondary side extend from a plurality of mutually separated spaces. Under full power operation, all these spaces are connected to each other and to the feed water pipe. When the power and the steam production of the reactor are reduced, some of the steam generator tubes are successively shut off from the supply of feed water, whereas the other tubes still receive a supply of feed water close to the supply as at full power, thus ensuring the flow therein to remain stable. In this way, a stable flow on the secondary side can be ensured over the whole power range.

The primary cooling water, which, under the last mentioned condition, does not come into contact with the tubes which are supplied with feed water on the secondary side, will not be cooled in the steam generator. However, after leaving the steam generator, this primary cooling water will be mixed with fully cooled water which has been in contact with feed water supplied steam generating tubes. Thus, the resultant mixture has the same temperature as if all tubes would have been supplied with the same amount of feed water. Since the cooling of the primary coolant in steam generators only amounts to about 30° C, thermal stresses in the equipment, caused by the sectioning, are prevented from reaching impermissible values.

## Claims

1. Steam generator for a pressurized water reactor comprising means for supply and return of hot water from and to the reactor for heating of feed water for steam generation, and means for supply of said feed water and removal of the steam generated, **characterized** in that bundles of U-shaped tubes (1) arranged to be traversed by feed water are located around a riser (8) for hot water from the reactor, that the hot water for heating the feed water is adapted to be supplied from above (3) at one of the upper ends of the tube bundles, that the hot water, after flowing along the tubes (1), is adapted to be led away from the other upper end of the tube bundles via at least one vertical gap (6) extending downwards between the tube bundles the lower end of of said gap being connected to a passage way back to the reactor.

2. Steam generator according to Claim 1, **characterized** in that in each bundle of tubes each end of the U-shaped tubes is attached to a tube sheet (2).

3. Steam generator according to Claim 1 or 2, **characterized** in that means (11) are provided above the tube sheet for separating the supplied feed water from the removed steam.

4. Steam generator according to any of the preceding Claims, **characterized** in that the hot water is adapted to be radially supplied to the tube bundles through small openings in the inner wall (5) of an angular space (3) surrounding the upper part of the tube bundles, ( the outer wall (4) of said angular space (3) may constitute the outer limit of the steam generator.

5. Steam generator according to any of the preceding Claims, **characterized** in that the hot water is adapted to be returned, after having given off heat, radially to an annular space (7) at the lower end of the tube bundles which is connected to the reactor.

6. Steam generator according to any of the preceding Claims, **characterized** in that the vertical gaps (6) for returning the hot water are located and arranged such as to separate regions where the hot water flows downwards from regions where the hot water flows upwards around the tube bundles.

7. Steam generator according to any of the preceding Claims, **characterized** in that the feed water ends of the steam generator tubes extend from a plurality of mutually separated spaces in the inlet part of the steam generator, which spaces are arranged to be hydraulically connected with one another at arbitrary patterns.

FIG.1

FIG.2

FIG.3

FIG.4

EP 0 296 357 A1

April 28, 1988

22 042 PE

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 431 785 (C.R. WILLBY, R.P. RICHARDS) | 1-7 | F 22 B 21/22 |
| Y | *Page 2; figures 1,2* | 1-3 | |
| | - - - | | |
| Y | US-A-3 298 358 (J.W. ALDEN) *Column 2,3; figures 1,4* | 1-3 | |
| | - - - - - | | |

**TECHNICAL FIELDS SEARCHED (Int. Cl.4)**

F 22 B
F 28 D
G 21 C

The present search report has been drawn up for all claims

| Place of search | Date of completion of the search | Examiner |
|---|---|---|
| STOCKHOLM | 23-08-1988 | HALL A. |